# EUROPEAN PATENT APPLICATION

(11) **EP 3 859 318 A1**
(43) Date of publication of application: **04.08.2021**
(21) Application number: 21153786.5
(22) Date of filing: 27.01.2021
(51) Int. Cl.: G01N 21/88, G01N 21/95

(54) **APPARATUS AND METHOD FOR CAPTURING MULTIPLE IMAGES OF FLAT PLATES**

(30) Priority: 30.01.2020 IT 202000001816
(71) Applicant: Maema S.R.L. Unipersonale, 37069 Villafranca di Verona (VR) (IT)
(72) Inventor: LOVATO, Claudio, 37131 VERONA (IT)
(74) Representative: Maroscia, Antonio

(57) **Abstract**

An apparatus (1) for capturing multiple images (P) of flat slabs (L) of stone material or the like, comprising a supporting surface (2) for at least one slab (L), a frame (3) adapted to delimit an imaging area (Wi) and adapted to support at least one beam (4) thereabove, a plurality of photographic devices (9) being mounted to the beam (4) and facing the supporting surface (2), wherein the photographic devices (9) are connected to a data processing unit. The photographic devices (9) comprise high-definition capture sensors adapted to simultaneously capture one or more partial images (P₁, P₂,...,P_{N}) of the underlying slab (L) and the processing unit is configured to receive and process the one or more partial images (P₁,P₂,... ,P_{N}) and provide a single image (P_{U}) of the entire top surface (S) of the slab (L) by correcting any parallax errors and optical distortions of said capture sensors. A method of capturing multiple images (P) of flat slabs (L)

## Description

### Technical field

The present invention generally finds application in working of slabs of stone, cement, glass or similar materials and particularly relates to an apparatus for capturing and processing multiple images of flat slabs.

The invention also relates to a method of capturing multiple images of flat slabs using the aforementioned apparatus.

### Background art

In working of slabs of stone material or the like, apparatus for imaging an outer surface of the slabs have been long known.

Such apparatus are configured to identify and manually mark any irregularities and/or imperfections on the slab or to take a picture of one of its surfaces and later print the picture on a sheet support to be glued on another structural element to reproduce the natural veins of the original slab.

In these particular imaging techniques a slab is positioned on a supporting surface which may be fixed or move in a longitudinal direction and a photographic device is mounted to a fixed frame placed above the supporting surface and facing the slab being imaged.

Furthermore, an electronic pointer is used, which has a telescopic rod, moved by an operator, having a sensor at its end adapted to mark the area of the slab characterized by imperfections such as, for example, voids or cracks.

The photographic device and the sensor are electronically connected to a data processing unit for detecting the marks made by the pointer to thereby allow an operator to identify, for example, the cutting, polishing or resin-reinforcement areas in a later workstation.

However, in such apparatus, marking of irregularities and identification of the working areas are carried out manually by an operator and therefore require skilled labor.

Also, the presence of a single photographic device for slab imaging generates parallax errors and optical distortion due to errors inherent in the capture sensor of the photographic device, which will be reproduced during slab analysis and/or working.

In an attempt to at least partially obviate these drawbacks, apparatus have been developed for capturing multiple images of flat slabs using a plurality of photographic devices arranged above the slab, as disclosed, for example, in CN109523539, US2006/228018, DE4301546 and US9613412.

JPH08271234 discloses an apparatus and a method for imaging flat slabs comprising a supporting surface for a longitudinally moving slab and a plurality of cameras transversely arranged to the slab.

Each camera is designed to detect a plurality of marks on the slab for identifying the areas of the slab characterized by imperfections such as, for example, cavities or cracks, wherein the marks are manually generated by an operator.

The apparatus further comprises a slab positioning sensor for monitoring the position of the slab relative to the plurality of cameras and a data processing unit connected to the cameras and configured to process the images detected by each capture sensor of the camera.

The imaging method includes processing of the marks on the top surface of the slab by means of the data processing unit and identifying them according to their position.

A first drawback of this known solution is that identification and marking of irregularities are carried out manually by an operator.

This drawback is particularly felt when the slab has a very large size, resulting in an increase of the times required for manual marking of the slab and hence of shutdown times.

In addition, this known solution does not afford high-definition photographic rendering of all the details and defects throughout the top surface of the slab.

An additional drawback of this solution is that the presence of fixed cameras that capture images of a moving slab helps to increase the value of parallax errors and optical distortions.

A drawback common to these known solutions is that the imaged area of the slab is not uniformly illuminated to avoid shadows or undesired reflections.

Furthermore, since each slab has well-defined image and aesthetic and physical appearance and an almost well-defined individual identity, the need is generally felt to uniquely, safely and traceably identify each slab.

### Technical Problem

In light of the prior art, the technical problem addressed by the present invention is to afford accurate and unique detection of the slab size as well as the presence and position of any surface defects.

### Disclosure of the invention

The object of the present invention is to obviate the above drawback by providing an apparatus and a method for capturing multiple images of flat slabs that is highly efficient and relatively cost-effective.

A particular object of the present invention is to provide an apparatus and a method as described hereinbefore that afford optimized operation irrespective of the size and surface conditions of the slab.

A further object of the present invention is to provide an apparatus and a method as described hereinbefore, that can accurately and uniquely detect the slab size.

Another object of the present invention is to provide an apparatus and a method as described hereinbefore that can considerably reduce imaging and shutdown times.

A further object of the present invention is to provide an apparatus and a method as described hereinbefore, that can reduce the overall times for installation and calibration of the photographic devices.

Yet another object of the present invention is to provide an apparatus and a method as described hereinbefore, that require no particular skill of an operator for handling thereof.

A further object of the present invention is to provide a method as described hereinbefore that can ensure aesthetic and physical recognition of each individual slab, thereby preventing it from being mistaken for other similar ones.

A further object of the present invention is to provide a method as described hereinbefore that can afford automated size detection, to increase the overall throughput.

Another object of the present invention is to provide an apparatus as described hereinbefore that has high flexibility and allows detection of top images of the slab irrespective of its thickness.

These and other objects, as more clearly shown hereinafter, are achieved by an apparatus for capturing multiple images of flat slabs as defined in claim 1, comprising a supporting surface for at least one slab, a frame adapted to delimit an imaging area and adapted to support at least one beam thereabove, a plurality of photographic devices being mounted to the beam and facing the support surface, wherein the photographic devices are connected to a data processing unit and comprise high-definition capture sensors adapted to simultaneously capture one or more partial images of the underlying slab.

In addition, the processing unit is configured to receive and process the one or more partial images and provide a single image of the entire top surface of the slab.

According to a particular aspect of the invention, the partial images have an optically corrected portion which accurately and uniquely represents the portion of the photographed slab and, along the peripheral edges, optically distorted portions generated by the inherent imperfections of the capture sensors, such as parallax errors and optical distortions.

Advantageously, the data processing unit is adapted to correct capture sensor imperfections by processing the partial images to overlap and remove the optically distorted portions, to juxtapose the optically corrected portions and to obtain an optically corrected and distortion-free single image, and processing means are provided for automatic detection of any roughness changes, presence of surface defects or positioning thereof relative to the edges of the slab.

With this configuration, the apparatus for capturing images of flat slabs provides a single image free of pallaxis errors and optical distortions, thereby affording automatic detection of the slab size and of any surface imperfections useful to develop subsequent working operations to be performed on the slab.

In a preferred embodiment, the photographic devices are equally spaced from each other and are uniformly arranged on the frame on a geometric plane located at a predetermined distance from the top surface of the slab according to the photographic resolution of the capture sensors.

Advantageously, the frame comprises vertical displacement means for moving the at least one beam so that the predetermined distance may be kept constant as a function of the thickness of the slab being worked.

This combination of characteristics allows the apparatus to capture images irrespective of the thickness of the slab and to detect the dimensions thereof either uniformly or under control of the surface conditions of the slab being worked.

A further aspect of the invention relates to a method of capturing multiple images of flat slabs using the apparatus as described hereinbefore, as defined in claim 10, and to a computer program for carrying out the method when the program is executed on a computer as defined in claim 11.

Advantageous embodiments of the invention are obtained in accordance with the dependent claims.

### Brief description of the drawings

Further features and advantages of the invention will be more apparent from the detailed description of a preferred, non-exclusive embodiment of an apparatus and a method for capturing multiple images of flat slabs, which are described as a non-limiting example with the help of the annexed drawings, in which:
FIG. 1 is a perspective view of an apparatus for capturing multiple images of flat slabs according to the invention;
FIGS. 2A, 2B and 2C are front, side and top views respectively of a photographic device of the apparatus of Fig. 1;
FIG. 3 is a top view of the apparatus of Fig. 1;
FIGS. 4 and 5 are front and side views respectively of the apparatus of Fig. 1;
FIGS. 6A, 6B and 6C are schematic representations of certain steps of the method of capturing multiple images of flat slabs according to the invention.

### Detailed description of a preferred exemplary embodiment

Particularly referring to the figures, there is shown an apparatus for capturing multiple images P of flat slabs L, generally designated by numeral 1.

By way of example and without limitation, the apparatus 1 is operable to capture images P from the top surface S of flat slabs L made of a material selected from the group comprising stone, marble, granite, porcelain, onyx, ceramic, stone conglomerates or concrete.

Furthermore, the apparatus 1 of the invention can be used to identify irregularities and/or imperfections on the slab L, to measure its plan size or to uniquely identify each slab L to generate a unique code thereof by means of QR code or a barcode.

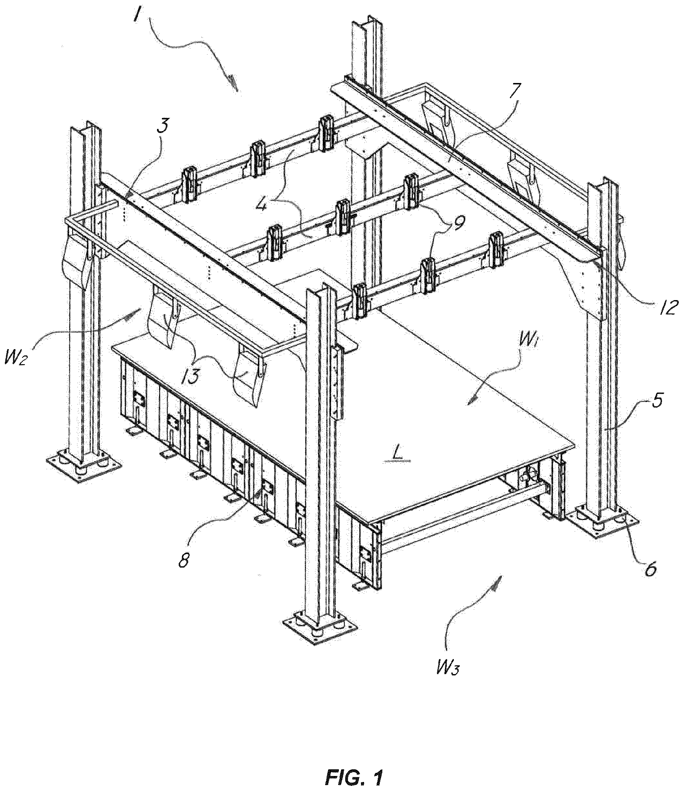

As shown in FIG. 1, the apparatus 1 comprises a substantially horizontal supporting surface 2 for at least one slab L and a frame 3 adapted to delimit an imaging area W₁ and adapted to support at least one beam 4 above the supporting surface 2.

In the embodiment of the figures, the frame 3 has a bridge configuration and comprises a plurality of uprights 5 anchored to the ground G via respective vibration-damping members 6 and adapted to support at least a pair of substantially horizontal longitudinal members 7 for supporting the at least one beam 4.

Nevertheless, the apparatus 1 may also have a frame 3 that is suspended from the ground G, without departure from the scope of the invention.

The imaging area W₁, and therefore the apparatus 1, may be interposed between a loading/unloading area W₂ for the slabs L from which images P are captured and a working area W₃ for the slabs L.

Therefore, the supporting surface 2 may be movable along a longitudinal axis X and comprise horizontal displacement means 8 for selectively moving the slabs L from the loading/unloading area W₂ to the imaging area W₁ and/or to the working area W₃ for the slabs L.

Advantageously, the supporting surface 2 may comprise a conveyor belt 2' or a series of adjacent annular wires subtended by a plurality of rollers 2", to support the slab L as it longitudinally moves over the areas W₁, W₂ and/or W₃.

As shown in FIG. 1, the apparatus 1 comprises a plurality of photographic devices 9 mounted to the at least one beam 4 and facing the supporting surface 2.

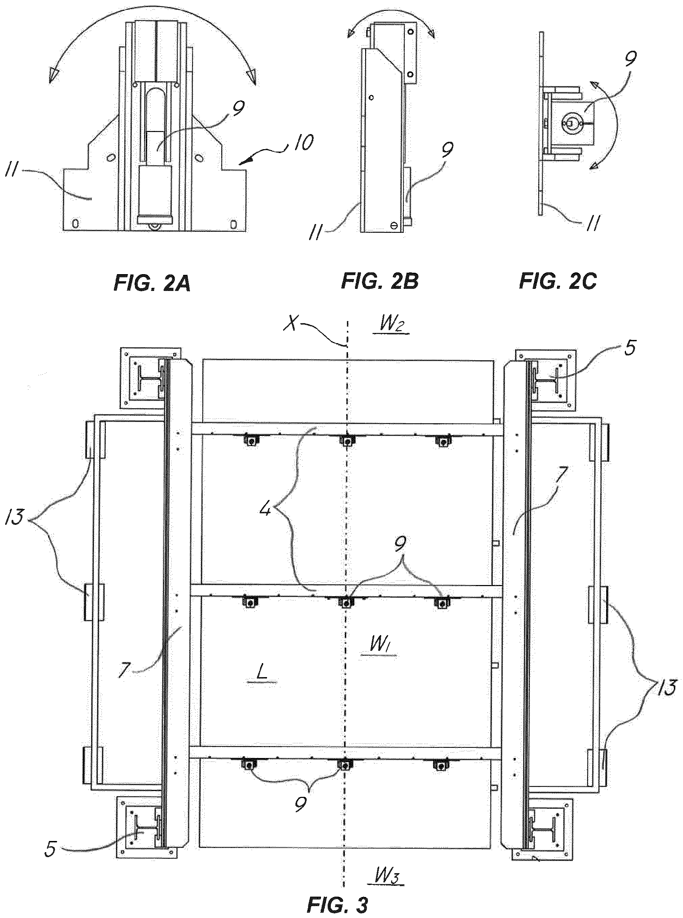

In particular, the frame 3 may comprise anchor means 10 for securing each photographic device 9 to the at least one beam 4 while allowing it to be stably positioned and individually rotated about the three Cartesian axes, as best shown in FIGS. 2A, 2B and 2C.

The anchor means 10 may comprise, for each photographic device 9, a substantially vertical support plate 11 hinged to the beam 4 and equipped with one or more electric servomotors, not shown, to allow the photographic device 9 to be rotated and tilted relative to the supporting surface 2.

In an alternative embodiment, not shown, the frame 3 may be longitudinally movable relative to the supporting surface 2 to allow the photographic devices 9 to be moved relative to the top surface S of the slab L.

Advantageously, the plurality of photographic devices 9 is connected to a data processing unit, not shown. This data processing unit may be further connected to each electromechanical device of the apparatus 1, for automatic control thereof.

In a well-known manner, each photographic device 9 is connected to the data processing unit by cable or fiber-optic connection with a Gigabit Ethernet protocol or higher, to allow transfer of the detected information at a minimum speed of 1 Gbit/sec.

Furthermore, the photographic devices 9 comprise high-definition capture sensors adapted to simultaneously capture one or more partial images P₁, P₂,...,P_{N} of the underlying slab L and the processing unit is configured to receive and process the one or more partial images P₁, P₂,..., P_{N} and provide a single image P_{U} of the entire top surface S of the underlying slab L.

As used herein, the term "high definition" refers to the ability of a capture sensor to detect the distance between two points in an object from an image and in an accurate manner. In other words, it is the ability to minimize the difference between the actual distance between the two points as directly measured on the object and the distance between the same points as measured on the image P as captured by the capture sensor.

Therefore, it is the ability of the capture sensor to distinguish two points that are very close to each other irrespective of the distance of the capture sensor from the two points.

With the apparatus 1 of the invention, this difference is reduced by adjusting the distance between the capture sensor of each photographic device 9 and the top surface S of the slab L, which depends on the size of the capture sensor and the diameter of the optical lens of the photographic device 9, as best described below.

As best shown in FIGS. 1 and 3, the photographic devices 9 are equally spaced from each other and uniformly arranged on the frame 3 on a geometric plane located at a predetermined distance h from the top surface S of the slab L according to the photographic resolution of the capture sensors.

For this purpose, the frame 3 comprises vertical displacement means 12 for moving the at least one beam 4 so that the predetermined distance h may be kept constant as a function of the thickness of the slab L in the imaging area W₁.

In a well-known manner, the vertical displacement means 12 and the horizontal displacement means 8 may comprise one or more electric motors selected from the group comprising rotary and linear motors.

In the embodiment of the figures, the frame 3 comprises nine identical photographic devices 9, arranged in a "grid" or "array" plan configuration, with a 3x3 pattern and at the same distance h from the top surface S of the flat slab L.

In this embodiment, the flat slab L may have a length of 4000 mm and a width of 2400 mm. Nevertheless, for slabs L of larger sizes, a greater number of photographic devices 9 may be provided.

In a preferred embodiment of the invention, the predetermined distance h is 1730 mm and the photographic devices 9 comprise an optical lens with a focal length of 16 mm and a 1" capture sensor.

In this embodiment, the area that is imaged by each photographic device has a length of 136 8mm and a width of 912 mm with 20 Mpx for each individual partial image P₁, P₂,..., P_{N}, a resolution of 5472 x 3649 px and a difference between the actual distance as measured between two points of the slab L and the distance between the same points as measured on the single image P_{U} of 0.25 mm.

It will be appreciated that the apparatus can accurately and uniquely detect the size of the slab L from the single image P_{U}.

By way of example and without limitation, the apparatus 1 may comprise photographic devices 9 having different characteristics, which are used to detect predetermined surface characteristics such as, for example, the color of the slab L.

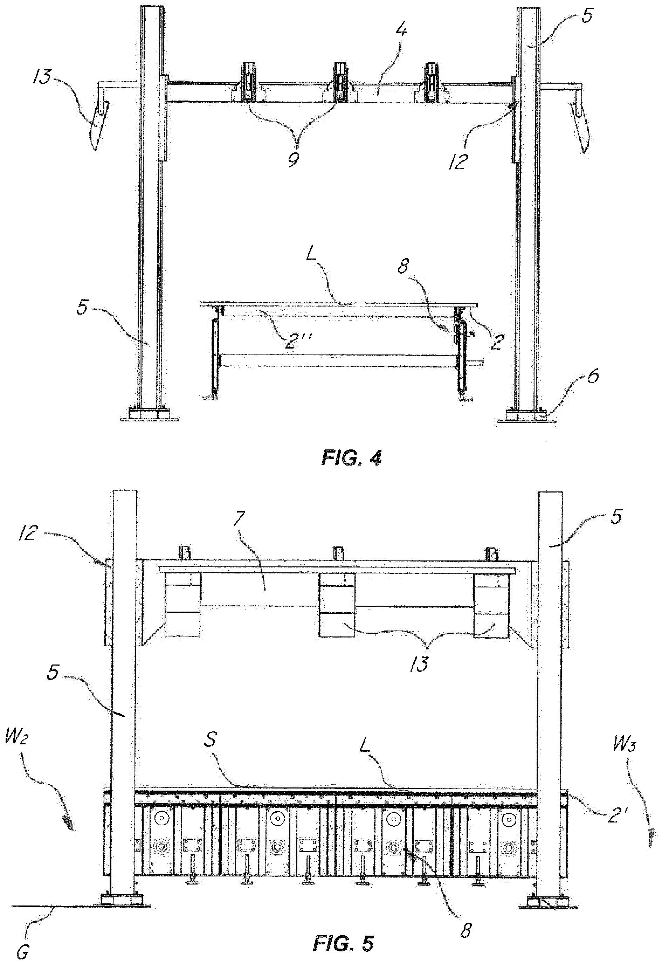

As best shown in FIGS. 4 and 5, the apparatus may comprise a plurality of lighting devices 13 for providing controlled lighting in the imaging area W₁ and selected from the group comprising LED light sources, such as LED bars or projectors.

Preferably, such lighting devices 13 may be positioned outside the imaging area W₁ and be aligned with the photographic devices 9 to avoid or at least reduce undesired light reflections.

In an alternative embodiment of the invention, not shown, the lighting devices 13 may be arranged inside the imaging area W₁ and on the same geometric plane as the photographic devices 9 to provide diffuse and homogeneous illumination on the top surface S of the slab L.

It shall be noted that the LED light source does not alter the temperature within the imaging area W₁. Nevertheless, the apparatus 1 may also comprise a cooling system for cooling the imaging area W₁ to limit deformation of the slab L.

According to a particular aspect of the invention, the partial images P₁, P₂,..., P_{N} captured by the capture sensors of each photographic device 9 have optically distorted portions 15 along the peripheral edges 14, generated by inherent imperfections of the capture sensor, such as parallax errors and optical distortions and having, for example, a convex geometric shape.

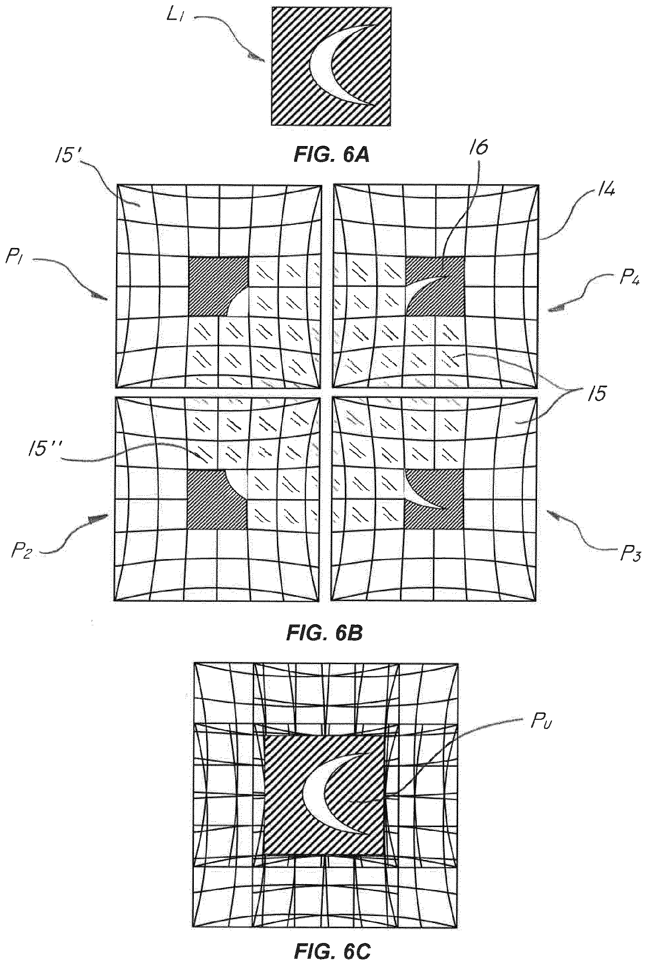

This type of distortion is generally referred to as cushion distortion or barrel distortion, depending on its shape. One example of cushion distortion is shown in FIG. 6B.

Furthermore, the partial images P₁, P₂,..., P_{N} have an optically corrected portion 16 which accurately and uniquely represents the photographed portion of the slab L.

According to a particular aspect of the invention, the data processing unit is adapted to process the partial images P₁, P₂,..., P_{N} by overlapping and removing the optically distorted portions 15 to obtain an optically corrected single image P_{U} and juxtaposing the optically corrected portions 16 to obtain an optically corrected, distortion-free single image Pu.

In the example that is schematically illustrated in FIGS. 6A, 6B and 6C, once a slab L₁ has been positioned below four photographic devices 9, each device can capture four different partial images P₁, P₂, P₃, P₄ each having an optically distorted portion 15 to be removed and an optically corrected portion 16 representing a respective portion of the slab L₁.

Then, the data processing unit is configured to remove the optically distorted portions 15 from each partial image P₁, P₂, P₃, P₄ and to juxtapose the optically corrected portions 16, as shown in FIG. 6C, to generate an optically corrected, distortion-free single image Pu of the slab L₁, in which the distance between two points detected in the single image Pu substantially matches the distance that would be obtained by directly measuring the two points on the slab L₁, with a tolerance of about 0.25 mm.

Conveniently, the data processing unit will be configured to distinguish the optically distorted portions 15" to be overlapped to juxtapose the optically corrected portions 16 from the optically distorted portions 15' representing portions outside the slab L, to be removed when composing the single image Pu.

Advantageously, the apparatus 1 of the invention comprises means for processing the single image Pu for automatic detection of any roughness changes, surface defects or positioning thereof relative to the edges of the slab L.

That is, the apparatus 1 is configured to automatically process the optically corrected single image Pu to determine a unique code of the slab L and calculate one or more cutting parameters as a function of the roughness changes, the presence of surface defects and their position relative to the edges of the slab L.

A further peculiar aspect of the invention provides a method of capturing multiple images P of a flat slab L.

The method of the invention includes a first step a) of providing the apparatus 1 as described above.

Conveniently, the calibration of the photographic devices 9 and the lighting devices 13 may be carried out only once by the manufacturer of the plant 1 or by skilled operators.

Then, a step b) is provided of actuating the horizontal displacement means 8 to move the slab from the loading/unloading area W₂ to the imaging area W₁ to allow the apparatus 1 to capture one or more images P of the top surface S of the slab L.

The step of b) actuating the horizontal displacement means 8 may be followed by a step of switching on the lighting devices 13 and, optionally, a waiting step to allow dissipation of the vibrations generated by the translational movement of the slab L.

Later, a step c) is provided of actuating the photographic devices 9 having high-definition capture sensors for simultaneously capturing one or more partial images P₁, P₂,..., P_{N} of the underlying slab L and possibly having optically distorted edge portions 15 and at least one optically corrected portion 16.

A step is further provided of d) actuating the processing unit to receive and process the one or more partial images P₁, P₂,..., P_{N} by overlapping and removing the optically distorted portions 15, to juxtapose the optically corrected portions 16 and obtain an optically corrected, distortion-free single image P_{U} of the entire top surface S of the slab L, by correcting any parallax errors and optical distortions of the capture sensors.

As shown in FIGS. 6A to 6C, the partial images P₁, P₂,..., P_{N} have optically distorted portions 15 along the peripheral edges 14 and the data processing unit is adapted to process the partial images P₁, P₂,..., P_{N} to be overlapped to remove the optically distorted portions 15 and obtain an optically corrected single image Pu.

Steps are also provided of e) processing the optically corrected single image P_{U} to automatically detect any roughness changes, surface defects or their positioning relative to the edges of the slab and of f) actuating the horizontal displacement means 8 to move the slab L from the imaging area W₁ to the loading/unloading area W₂ or to the working area W₃ for the slab L.

Finally, a step is provided of g) automatically processing the optically corrected single image Pu to determine a unique code of the slab L or to calculate one or more cutting parameters as a function of the roughness changes, the presence of surface defects and their position relative to the edges of the slab L.

It will be appreciated that the method of the invention provides a single image P_{U} free of parallax errors and optical distortions, thereby affording automatic detection of the size of the slab L and of any surface imperfections useful to develop subsequent working operations to be performed on the slab L.

Conveniently, the lighting devices 13 may remain on only during the step c) of actuating the photographic devices 9 for capturing the partial images P₁, P₂,..., P_{N} to optimize power consumption of the apparatus 1.

Another peculiar aspect of the invention provides a computer program comprising program codes adapted to carry out the steps of the method as described above when the program is executed on a computer.

The computer program may be designed in C++ language with OpenCV 3.4.3 libraries or later languages according to the technical evolution and may be used in Windows 10 or a similar operating system.

Moreover, the program may be also configured to generate an identifier for each slab L to be stored in the storage means of the data processing unit or to calculate the parameters of the cutting lines to be formed on the slab L in the working area W₃.

Possibly, automatic detection of surface imperfections on the slab L by the program may be supervised by a skilled operator, who may increase or decrease the threshold of imperfections to be considered as defects or degradation of the surface S, and hence elements not to be removed with the cutting operations in the working area W₃.

It will be appreciated from the foregoing that the apparatus for capturing multiple images of flat slabs, the method of capturing and the computer program fulfill the intended objects and particularly afford capturing of a single image of a slab surface to accurately and uniquely detect the slab size as well as the presence and position of surface defects.

The apparatus and method of the invention are susceptible to a number of changes or variants, within the inventive concept disclosed in the annexed claims.

While the apparatus and method have been described with particular reference to the accompanying figures, the numerals referred to in the disclosure and claims are only used for the sake of a better intelligibility of the invention and shall not be intended to limit the claimed scope in any manner.

Reference herein to "one embodiment" or "the embodiment" or "some embodiments" indicates that a particular characteristic, structure or member that is being described is included in at least one embodiment of the inventive subject matter.

Furthermore, the particular characteristics, structures or members may be combined together in any suitable manner to provide one or more embodiments.

### Industrial Applicability

The present invention may find application in industry, because it can be produced on an industrial scale in factories of the stone material processing industry.

## Claims

1. An apparatus (1) for capturing multiple images (P) of flat slabs (L) of stone material or the like, comprising a supporting surface (2) for at least one slab (L), a frame (3) adapted to delimit an imaging area (W₁) and adapted to support at least one beam (4) thereabove, a plurality of photographic devices (9) being mounted to said beam (4) and facing said supporting surface (2);
wherein said photographic devices (9) are connected to a data processing unit and comprise high-definition capture sensors adapted to simultaneously acquire one or more partial images (P₁, P₂,..., P_{N}) of the underlying slab (L);
wherein said data processing unit is configured to receive and process said one or more partial images (P₁, P₂,...,P_{N}) and provide a single image (Pᵤ) of the entire top surface (S) of the slab (L);
**characterized in that** said partial images (P₁, P₂,...,P_{N}) have an optically corrected portion (16) accurately and uniquely representing the photographed portion of the slab (L) and optically distorted portions (15) along the peripheral edges (14), generated by inherent imperfections of said capture sensors, said data processing unit being adapted to correct the imperfections of said sensors by processing said partial images (P₁, P₂,..., P_{N}) by overlapping and removing said optically distorted portions (15), to juxtapose said optically corrected portions (16) and to obtain an optically corrected, distortion-free single image (Pᵤ), processing means being provided for automatic detection of any roughness changes, surface defects or positioning thereof relative to the edges of the slab (L).

2. Apparatus as claimed in claim 1, **characterized in that** said photographic devices (9) are equally spaced from each other and are uniformly arranged on said frame (3) on a geometric plane located at a predetermined distance (h) from the top surface (S) of the slab (L) according to the photographic resolution of said capture sensors.

3. Apparatus as claimed in claim 2, **characterized in that** said frame (3) comprises vertical displacement means (12) for moving said at least one beam (4) so that said predetermined distance (h) may be kept constant as a function of the thickness of the slab (L) in the imaging area (W₁)

4. Apparatus as claimed in claim 1, **characterized in that** each of said photographic devices (9) is connected to said data processing unit by cable or fiber-optic connection with a Gigabit Ethernet protocol.

5. Apparatus as claimed in claim 1, **characterized in that** said frame (3) comprises anchor means (10) for securing each photographic device (9) to said at least one beam (4), said anchor means (10) being able to allow rotation of each photographic device (9) about the three Cartesian axes.

6. Apparatus as claimed in claim 1, **characterized in that** it comprises a plurality of lighting devices (13) adapted to ensure controlled illumination in said imaging area (W₁), said lighting devices (13) being selected from the group comprising LED light sources.

7. Apparatus as claimed in claim 6, **characterized in that** said lighting devices (13) are located outside said imaging area (W₁) and are aligned with said photographic devices (9) to reduce undesired light reflections.

8. Apparatus as claimed in claim 1, **characterized in that** said supporting surface (2) comprises horizontal displacement means (8) for selectively moving the slabs (L) from a loading/unloading area (W₂) to said imaging area (W₁) and/or to a working area (W₃) for the slabs (L).

9. Apparatus as claimed in claim 8, **characterized in that** said supporting surface (2) comprises a conveyor belt (2') or a series of contiguous annular wires.

10. A method of capturing multiple images (P) of flat slabs (L), comprising the steps of:
a) providing an apparatus (1) as claimed in one or more of claims 1 to 9;
b) actuating said horizontal displacement means (8) to move the slab (L) from said loading/unloading area (W₂) to said imaging area (W₁);
c) actuating said photographic devices (9) having high-definition capture sensors configured to simultaneously capture one or more partial images (P₁, P₂,..., P_{N}) of the underlying slab (L) and possibly having optically distorted edge portions (15) and at least one optically corrected portion (16);
d) actuating said processing unit to receive and process said one or more partial images (P₁, P₂,..., P_{N}) by overlapping and removing said optically distorted portions (15), to juxtapose said optically corrected portions (16) and to obtain an optically corrected, distortion-free single image (Pᵤ);
e) processing said optically corrected single image (Pᵤ) to automatically detect any roughness changes, surface defects or positioning thereof relative to the edges of the slab (L);
f) actuating said horizontal displacement means (8) to move the slab (L) in said loading/unloading area (W₂) or in said working area (W₃) for the slabs (L);
g) automatically processing said optically corrected single image (P_{U}) to determine a unique code of the slab (L) and calculate one or more cutting parameters as a function of the roughness changes, the presence of surface defects and their position relative to the edges of the slab (L).

11. A computer program comprising program codes adapted to carry out the steps of the method as claimed in claim 10, when the program is executed on a computer.
